# FASCICULE DE BREVET EUROPEEN

(11) **EP 0 376 249 B1**
(45) Date de publication et mention de la délivrance du brevet: **11.09.1996**
(21) Numéro de dépôt: 89123954.3
(22) Date de dépôt: 27.12.1989
(51) Int. Cl.: G06F 13/362

(54) **Procédé de déblocage d'un système multiprocesseurs multibus**
Deblockierverfahren eines Multiprozessor-Multibus-Systems
Deblocking method for a multiprocessor multibus system

(30) Priorité: 30.12.1988 FR 8817506
(43) Date de publication de la demande: 04.07.1990
(73) Titulaire: ALCATEL CIT, F-75008 Paris (FR)
(72) Inventeur: Lallement, Philippe, F-78150 Le Chesnay (FR)
(74) Mandataire: Weinmiller, Jürgen

(56) Documents cités:
- DE-A- 3 631 086
- US-A- 3 641 505
- COMMUTATION & TRANSMISSION, vol. 7, no. 3, 1985, pp. 69-78, Paris, FR; M. DUCOURANT: "Le système multiprocesseur X83"

## Description

Le domaine de l'invention est celui des systèmes multiprocesseurs du type comportant au moins un module de traitement constitué de processeurs connectés à un bus principal. D'une manière plus générale, l'invention concerne des systèmes multibus, dans lesquels plusieurs modules de traitement communiquent entre eux à travers des coupleurs de bus.

Le document FR-A-2 538 140 divulgue un tel système.

Une configuration de ce type apparaît notamment dans des systèmes de commutation de données du type de la famille de commutateurs commercialisés par le déposant sous la dénomination "Alcatel 8300".

Dans ce type de systèmes multiprocesseurs, chaque processeur inclut des moyens de gestion d'accès au bus principal du module auquel il appartient, selon un processus en deux phases. Au cours d'une première phase, correspondant par exemple à un cycle d'horloge, l'ensemble des demandes d'accès au bus provenant de tous les processeurs du module est traité par une logique d'arbitrage des priorités, de façon à identifier un vainqueur du processus d'allocation. Ce vainqueur devient alors le "prochain maître" du bus. Au cours d'une seconde phase, c'est-à-dire dès que le bus du module est libéré, le circuit de prise de bus associé au processeur vainqueur assure l'accès exclusif du processeur au bus par émission d'un signal de maîtrise de bus.

Dans le cas de systèmes multibus, les coupleurs de bus assurant la communication entre les différents modules de traitement sur des bus différents coopèrent par paires d'un bus à l'autre, pour établir des liaisons bidirectionnelles à demande d'accès classique sur le bus destinataire correspondant.

On notera que la transmission de données d'un module à un autre peut conduire à parcourir plusieurs bus successifs pour atteindre le processeur destinataire.

De façon connue, la perturbation des signaux transitant par le bus, soit par panne d'un circuit émetteur ou récepteur sur une carte connectée au bus, soit par court-circuit au niveau d'un fond de panier, ou autre, peut entraîner un blocage soit des allocateurs, soit de la logique de prise de bus et de gestion de bus des cartes présentes sur le bus. Lorsque le blocage se produit à un moment où un coupleur de bus se trouve en mode de communication vers un module distant, le blocage peut se propager vers d'autre bus ; dans le pire des cas, il peut se produire un blocage complet de toute la configuration.

Il existe déjà des procédures de déblocage d'un système multiprocesseurs et multibus.

Parmi ces procédures, on connaît celles consistant à faire émettre un signal de réinitialisation de bus par la carte système. Le signal de réinitialisation consiste à agir sur les registres de connexion des processeurs de chaque module, et des coupleurs de bus, de façon à interdire à chaque carte d'émettre sur le bus, sans inhiber sa capacité à recevoir les signaux transitant par le bus.

Toutefois, l'émission d'un signal de réinitialisation est inadaptée à des structures multibus en boucle. En effet, dans le cas où au moins trois bus sont chaînés l'un à l'autre deux à deux, dans un circuit de chaînage fermé, on ne peut pas s'interdire d'envoyer le signal de réinitialisation sur l'ensemble du système bouclé. Le signal de réinitialisation s'automaintient alors, du fait des mécanismes spécifiques de neutralisation. Ce qui implique de faire des réinitialisations (reset) bus par bus et non pas un reset global.

D'autre part, la carte système peut éprouver dans certaines circonstances des difficultés à prendre le contrôle du bus, soit du fait d'un conflit avec une carte coupleur de bus, ou à la suite de la perte de la priorité d'accès sur le bus.

L'invention a pour objectif de pallier ces inconvénients en fournissant un système de déblocage de bus au moyen d'un processus parfaitement maîtrisé permettant un déblocage progressif et itératif d'un système multibus subissant un blocage général. Le procédé de l'invention présente ainsi l'avantage de permettre d'isoler le module défaillant des autres modules du système, sans perturber la configuration logicielle du système, ni les éventuels cycles bus en cours.

En outre, la solution de l'invention présente une parfaite compatibilité avec des systèmes existants de gestion de conflits de demandes d'accès réciproques simultanées entre deux bus.

Le procédé de l'invention telle qu'elle est définie dans les revendications est enfin également utilisable pour permettre l'émission de plusieurs cycles consécutifs sans relâcher le bus.

Ces objectifs, ainsi que d'autres qui apparaîtront par la suite sont atteints à l'aide d'un procédé de déblocage d'un système multiprocesseurs, système du type comportant au moins un module de traitement constitué chacun de processeurs connectés à un bus principal unique, chacun desdits processeurs incluant une cellule de gestion d'accès au bus principal en deux phases comprenant d'une part un système allocateur de bus fournissant au cours d'une première phase un signal de résultat (négatif ou positif), pour le processeur, de l'arbitrage des demandes d'accès exprimées au cours d'un même cycle par les processeurs du module, et d'autre part un circuit de prise de bus assurant, lors d'une seconde phase, l'accès au bus du processeur par émission d'un signal de maîtrise de bus en cas d'un résultat positif du système allocateur lors de la première phase,
procédé caractérisé en ce qu'il consiste à confier à une carte spécifique de déblocage une fonction de détection d'un blocage du module et une fonction de libération du bus dudit module,
et en ce que ladite fonction de libération du bus consiste à émettre un signal unique de décongestion, provoquant pour tous les processeurs du module d'une part un forçage négatif du résultat d'allocation, et d'autre part un forçage en annulation du signal de maîtrise de bus.

De façon avantageuse, le procédé de l'invention trouve à s'appliquer dans des systèmes multiprocesseurs dans lesquels ledit signal résultat d'arbitrage de l'allocateur est fourni par une logique d'arbitrage du module, ladite logique d'arbitrage recevant en entrée un signal de participation à l'allocation de chacun des processeurs émettant une demande d'accès au bus au cours d'un même cycle.

Dans ce cas, selon l'invention ledit signal unique de décongestion inhibe ladite participation à l'allocation de chacun desdits processeurs du module.

Selon une mise en oeuvre avantageuse de l'invention dans le cas d'un jeu d'au moins deux modules de traitement, chaque module de traitement communiquant avec au moins un autre module à travers une paire symétrique de coupleurs de bus principaux, chaque coupleur de bus participant aux mécanismes d'allocation et de prise de bus sur le bus destinataire, le procédé de déblocage est caractérisé en ce que ledit signal unique de décongestion est émis vers l'allocateur et le circuit de prise de bus de chacun desdits coupleurs connectés au bus à débloquer.

Dans le cas d'un blocage en cascade de plusieurs bus interconnectés par coupleurs, l'invention prévoit avantageusement que ladite carte de déblocage décongestionne itérativement chacun des bus en partant du bus le plus proche, par l'alternance d'une opération d'émission du signal de décongestion sur le bus de la carte de déblocage pour le libérer, puis d'une opération d'envoi au coupleur de bus dudit bus libéré d'un ordre de transmission du signal de décongestion au bus suivant et/ou d'un ordre d'inhibition de l'allocateur dudit coupleur pour isoler ledit bus suivant lorsqu'il est défaillant.

Selon une caractéristique préférentielle de l'invention, dans le cas où les coupleurs de bus sont munis de moyens de gestion des collisions de demandes réciproques d'accès au cours d'un même cycle entre deux bus adjacents, ledit signal de décongestion de bus et le signal de résolution de collision sont constitués par un signal unique.

D'autre part, dans le cas de l'émission d'un signal collision par un coupleur de bus, on peut prévoir d'émettre de façon facultative un signal de réinitialisation préalable à l'émission du signal de décongestion, sur le bus du module bloqué correspondant.

De façon avantageuse, ladite carte de décongestion comporte d'une part des moyens d'identification de la carte défaillante et/ou du module de la carte défaillante à l'origine du blocage, et d'autre part des moyens de neutralisation de ladite carte, et/ou d'isolation dudit module.

Selon l'invention, ladite carte de décongestion est avantageusement la carte système de réinitialisation dudit système multiprocesseurs et/ou une carte de supervision d'un des modules de traitement dudit système multiprocesseurs.

D'autres caractéristiques avantageuses de l'invention apparaîtront à la lecture de la description suivante de modes préférentiels de mise en oeuvre du procédé de l'invention, donnés à titre illustratif et non limitatif, et des dessins annexés dans lesquels :
- La figure 1 représente la configuration générale d'un système multiprocesseurs multibus, pour une application à la commutation de données, auquel est applicable le procédé de l'invention ;
- La figure 2 représente schématiquement le principe de connexion de deux bus adjacents à travers une paire de coupleurs de bus, dans le système de la figure 1 ;
- La figure 3 est un schéma illustrant la logique de demande d'accès, d'allocation et de prise de bus associée à un processeur du système de la figure 1 à allocation de bus répartie, compatible avec le procédé de l'invention ;
- La figure 4 illustre un processus de déblocage en cascade selon l'invention mis en oeuvre dans un système multibus bloqué ;
- La figure 5 schématise les modules fonctionnels de génération du signal de décongestion de l'invention par la carte système du système multiprocesseurs multibus ;
- La figure 6 illustre l'intégration du procédé de l'invention dans un coupleur de bus ;
- La figure 7 schématise les modules fonctionnels de traitement du signal de décongestion de l'invention dans un coupleur de bus muni d'une logique anticollision de résolution des conflits de demandes d'accès réciproques simultanées entre deux bus adjacents.

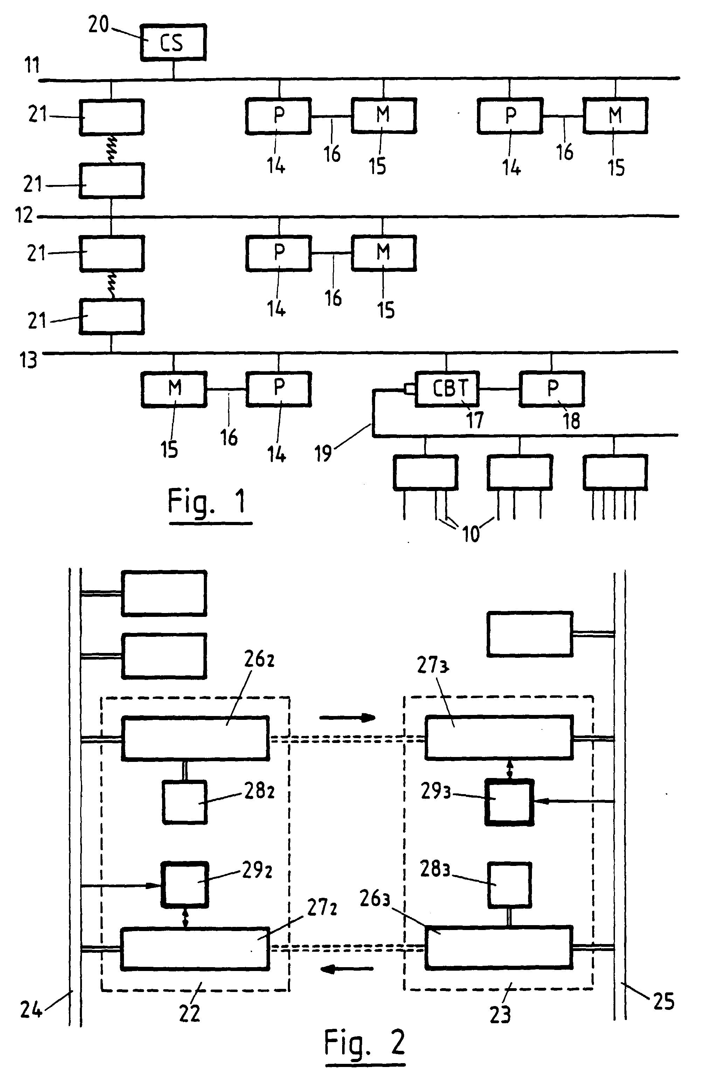

Le système multibus multiprocesseurs représenté en figure 1 schématise une application sous la forme d'un commutateur de données.

Un commutateur de données a pour fonction de recevoir des données numériques apportées par des lignes de transmission 10, et de trier et de regrouper ces données dans des moyens de traitement multiprocesseurs, de façon à les réexpédier sur des lignes d'émission 10 adéquates.

Dans une version simplifiée de l'architecture du commutateur multibus multiprocesseurs, on peut distinguer un bus de gestion 11, un bus de traitement 12, et un bus de commutation 13. Chacun de ces bus 11, 12, 13, correspond à un module de traitement comprenant chacun plusieurs processeurs 14, éventuellement associés chacun à une mémoire locale 15 à travers un bus local 16. Le bus de commutation 13 comporte en outre un coupleur de bus terminal 17 qui, associé à un processeur 18, gére le bus de transmission terminal 19 de connection des lignes 10 d'émission /réception.

Le bus de gestion 11 comporte en outre une carte système 20, dont le rôle est de surveiller l'ensemble du système multiprocesseurs multibus.

Les bus 11, 12, 13, sont par exemple des bus de type XBUS (fabriqués par la société ALCATEL CIT) comportant principalement cinq types de signaux :
- signaux d'adresses ;
- signaux de données bidirectionnels ;
- signaux de contrôle destinés aux échanges ;
- signaux de contrôle destinés à l'allocation du bus ;
- signaux de contrôle destinés à la gestion du système.

Chaque bus reçoit par exemple un nombre maximal de seize processeurs (carte maître), les autres emplacements pouvant correspondre à des adresses physiques de cartes esclaves (par exemple des mémoires).

Les bus 11, 12, 13, des différents modules du système multiprocesseurs communiquent à travers des coupleurs de bus 21 connectés par paires.

La figure 2 illustre la structure et le fonctionnement d'une paire de coupleurs de bus 22, 23, assurant la communication entre deux bus 24, 25.

Plusieurs types de coupleurs de bus sont envisageables. A titre d'exemple, on mentionnera pour mémoire les coupleurs présentant un fonctionnement du type "boîte aux lettres".

L'exemple présenté ici correspond à un fonctionnement avec "filtrage d'adresse" qui simule une prolongation du bus émetteur. Chaque coupleur 22, 23 comporte d'une part un module 26₂ 26₃ de réception des données provenant des bus 24, 25, respectivement, et d'autre part un module 272, 273 d'émission sur le bus 24, 25, des données reçues du coupleur distant 23,22, respectivement. En conséquence, la connection des deux coupleurs 22, 23, s'effectue d'une part entre le module récepteur 26₂ et le module émetteur 27₃ (transfert de données du bus 24 au bus 25), et d'autre part entre le module récepteur 26₃ et le module émetteur 27₂ (transfert de données du bus 25 au bus 24).

Chacun des modules émetteurs 26₂, 26₃, coopére avec une mémoire 28₂, 28₃ comportant des tables d'adresses spécifiques des bus distants. Les décisions de transfert prises par chaque coupleur 22,23, dépendent du contenu de ces tables d'adresses.

D'autre part, chaque module émetteur 27₂, 27₃, coopére avec des moyens 29₂,29₃, de gestion d'accés au bus 24, 25.

Un exemple détaillé de ce type de coupleur de bus pourra être trouvé dans le document de brevet français FR-A-2 538 140 du 21 décembre 1982.

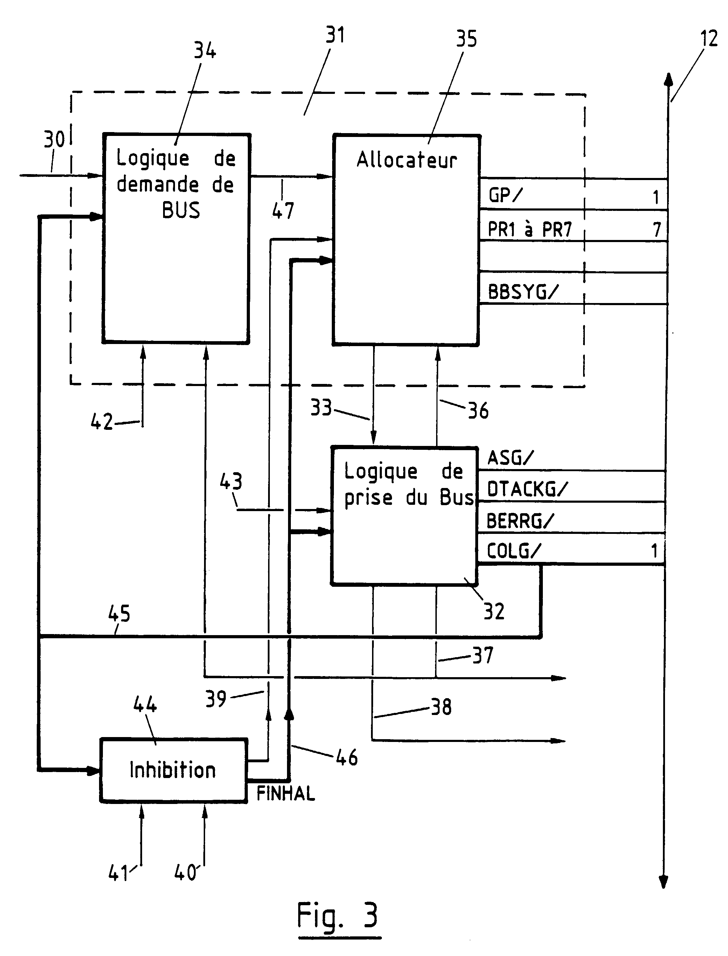

La figure 3 représente la logique de demande d'accès au bus de chaque processeur-maître des modules de traitement à bus unique 11, 12, 13. La logique de demande d'accés comprend d'une part un système d'allocation d'accès 31, synchrone et réparti, fonctionnant selon un processus d'arbitrage des demandes d'accès 30 exprimées par les processeurs, et d'autre part une logique de prise de bus 32, reliée au système d'allocation 31 par un signal 33 d'autorisation ou de non autorisation de prise de bus en fonction du résultat de l'opération répartie d'allocation.

Le système d'allocation 31 est constitué d'une part d'une logique de demande de bus 34, formée d'une bascule de synchronisation avec l'horloge de l'allocateur, et d'autre part d'un circuit allocateur 35 proprement dit, recevant les demandes d'accès 47 de la logique 34, et chargé de l'arbitrage des demandes d'accès, et de l'émission du résultat 33 d'arbitrage pour le processeur associé. L'arbitrage se fait soit en priorité fixe, soit en priorité tournante.

Les 16 adresses physiques de carte maître connectées au bus 12 sont réparties en 2 groupes de 8 adresses, dont un groupe est prioritaire (signal GP/). Dans chacun des groupes, la priorité est affectée par l'intermédiaire des signaux de priorité PR1 à PR7. Les signaux GP/ et PR1 et PR7 sont à entrée/sortie en collecteur ouvert sur le bus principal 12.

En priorité fixe, les priorités sont croissantes dans l'ordre de 0 à 7, et affectées chacune à un processeur connecté à une adresse physique du bus. La définition du prochain maître du bus 12 est effectuée par une logique d'écrasement des "1" sur les signaux PR : à la fin d'un cycle d'allocation, le vainqueur de l'arbitrage est celui qui appartient au groupe GP actif et qui a son fil PR actif.

En priorité tournante, les emplacements prioritaires (PR0 à PR7) sont variables, en réattribuant la priorité la plus basse à chaque dernière carte qui a pris le bus.

Le circuit allocateur 35 comporte également d'autres fils de communication avec le bus 12, notamment des fils d'identification de l'adresse de l'emplacement physique des fils pour le numéro du maître courant du bus (utilisation en priorité tournante), un fil d'horloge de synchronisation des allocateurs 35, et un fil "bus occupé".

Lorsqu'un processeur participant est élu, à la suite de l'opération d'allocation, il transmet cette information à la logique de prise de bus 32 par le signal de résultat d'allocation 33. Cette logique 32 surveille le bus 12, et à la fin du cycle en cours, prend la maîtrise du bus et envoie à l'allocateur 35 un signal 36 autorisant une nouvelle allocation pour le prochain maître du bus.

Le circuit de prise de bus 32 émet d'autre part sur le bus 12 le signal d'existence d'une adresse en cours de cycle (adresse strobe) ou d'existence de données en cours de cycle (strobe de données), et recoit les signaux d'acquittement des données. Enfin, le circuit 32 émet également des signaux 37, 38 de maîtrise du bus d'adresse et du bus de données.

La carte comporte également un fil 39 de mise hors service de l'allocateur 35, sur commande d'ordres de remise à zéro 40, ou sur un ordre extérieur d'inhibition 41, par exemple un ordre de déconnection transmis par la carte système 20. Les logiques de demande de bus 34 et de prise de bus 32 comportent elles aussi des fils de remise à zéro 42, 43 respectivement.

Le fonctionnement et le transfert des données dans le système de la figure 1 sont les suivants.

Les cycles de transfert sont asynchrones, de sorte que le bus est bloqué par le demandeur "carte maître" jusqu'à la réponse de la carte adressée. En cas de non réponse du destinataire, un "chien de garde" est déclenché sur la carte "demandeur", qui relâche le bus, et part en traitement d'erreur.

Les coupleurs de bus 21 analysent les adresses qui passent sur leur bus, et après filtrage d'adresse, ouvrent le chemin vers le bus distant lorsque nécessaire. Ainsi, le processeur 14 connecté au bus 11 peut adresser le processeur 14 ou la mémoire 15 connectée au bus 12. Dans ce cas, l'opération bloque tout d'abord le bus 11. Le coupleur 21 du bus 11 reconnaît l'adresse demandée, et ouvre le chemin vers le bus 12 qu'elle prend et bloque lorsque ce dernier est libre. Le destinataire répond, et le processeur émetteur libère alors les deux bus 11 et 12 à la réception de la réponse du destinataire.

Un transfert du bus 11 vers le bus 13 nécessitera d'utiliser le bus intermédiaire 12, en l'absence d'une paire de coupleurs spécifiques mettant en communication directe les bus 11 et 13. Les chiens de garde de chacun des processeurs sont calculés de façon à permettre l'exécution d'un transfert impliquant la cascade du nombre maximal de bus concernés par le transfert le plus distant.

Comme déjà noté en préambule, la perturbation des signaux du bus, soit par panne d'un circuit émetteur ou récepteur sur une carte, soit par court-circuit au niveau d'un fond de panier, entraîne un blocage des allocateurs 35 ou de la logique de prise de bus 32 des cartes connectées au bus. Lorsque le blocage se produit à un moment où le code présent sur le bus d'adresse correspond à l'adresse d'une carte située sur un autre bus, le blocage peut se propager vers les autres bus par l'intermédiaire des cartes coupleurs de bus 21. Au pire, il peut se produire un blocage complet de l'ensemble du système multibus. Tel est le cas par exemple du système de commutation de la figure 1 si la perturbation se produit à un moment où s'effectue un transfert de données entre le bus 11 et le bus 13.

A titre d'exemple, la mise à zéro permanente des signaux suivants peut provoquer une perturbation propageable sur plusieurs bus adjacents.

Dans la catégorie des signaux dont la perturbation entraîne un blocage des allocateurs 35, on peut noter :
. le signal indiquant un transfert en mode bloc (prise de bus pour plusieurs cycles) ;
. le signal de groupe prioritaire GP/ ;
. le signal de prise de bus BBSYG/.

Parmi les signaux dont la perturbation entraîne un blocage de la logique de prise de bus 32, on peut noter :
. les signaux d'existence d'une adresse ou de données en cours de cycle sur le bus : ASG/ et UDSG/ ;
. le signal d'acquittement des données DTACKG/ ;
. ...

Cette liste est donnée à titre non exhaustif. On notera que les signaux cités sont perturbateurs lors de leur mise à zéro permanente. La mise à 1 permanente d'un signal, correspondant à son état repos, ne propage normalement pas de perturbations vers d'autres bus.

Le déblocage du système suppose la mise en oeuvre des fonctions suivantes :
. une fonction de détection du blocage ;
. une fonction de décongestion de chaque bus, l'un après l'autre ;
. une fonction d'isolation du bus ou du processeur défaillant, avec traitement spécifique éventuel de dépannage de l'organe défaillant.

La fonction de décongestion des bus, constitutive de la présente invention, consiste en l'émission d'un signal unique spécifique de décongestion 45, représenté en trait gras sur la figure 3.

Ce signal unique 45 présente deux fonctionnalités :
. libérer le bus 12 ;
. interdire aux autres cartes maîtres connectées sur le bus 12 d'intervenir sur le bus.

Ces deux fonctionnalités sont remplies par une action d'une part sur la logique de demande de bus 34 et d'autre part à travers le module d'inhibition 44, par action sur le circuit allocateur 35 et la logique de prise de bus 32.

Le signal FINHAL 46 issu du module d'inhibition 44 est généré en synchronisme avec l'horloge, et est maintenu pendant toute la durée du signal unique de décongestion 45. Il transite par le même fil que le signal 39 d'inhibition de l'allocateur 35 sur ordre externe 40, 41.

L'action du signal de décongestion sur l'allocateur est la suivante :
. il inhibe la demande fournie à l'allocateur 35 par la logique de demande 34 ;
. il provoque une réinitialisation (reset) de la bascule interne à l'allocateur 35 qui autorise la participation à l'allocation et l'émission des signaux de priorité GP/ et PR1 à PR7 vers le bus 12 ;
. il provoque une réinitialisation de la bascule générant le signal BBSYG/ fournissant le résultat de l'arbitrage entre les demandes d'accès, pour le processeur concerné.

D'autre part, le signal de décongestion provoque la réinitialisation de la bascule interne à la logique de prise de bus 32 qui génère les signaux 38 de maîtrise des bus d'adresses et de données.

En d'autres termes, par cette action systématique sur les moyens de gestion d'accès de chaque processeur du bus, on s'assure que le maître courant relâche le bus, que le futur maître désactive son signal de résultat vainqueur de l'arbitrage, et qu'aucun allocateur ne participe plus à une opération d'arbitrage de demande d'accès.

La procédure utilisée permet ensuite une relance des demandes annulées par action sur la logique de demande de bus 34.

On peut ainsi considérer le signal de décongestion 45, 46 comme un signal de "superpriorité" au niveau des allocateurs 35. Le processus de décongestion ne pertube ainsi ni la configuration logicielle, ni les éventuels cycles bus en cours.

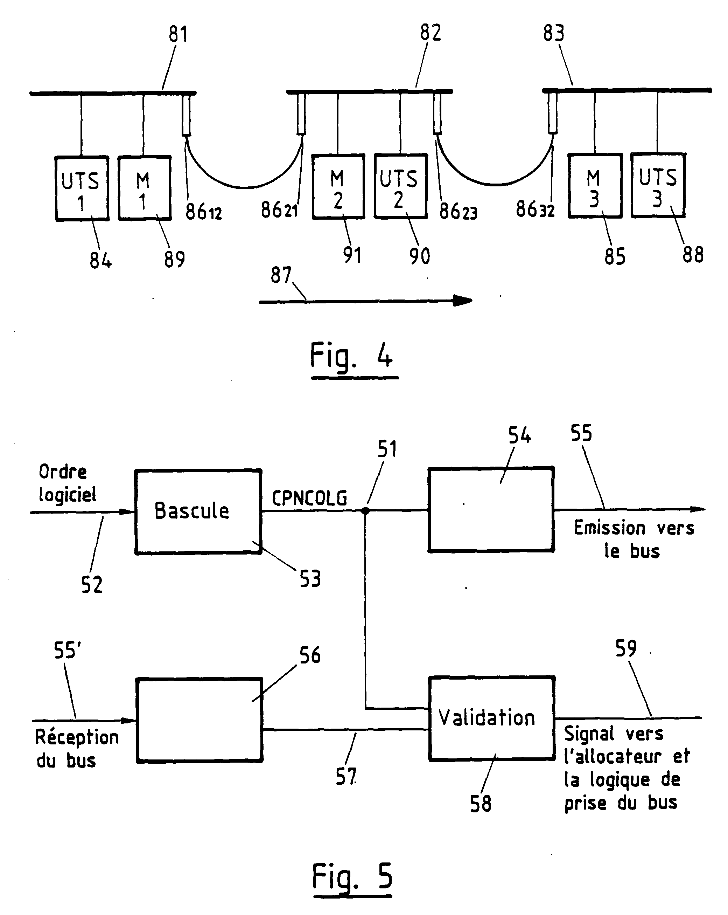

La figure 4 illustre le procédé de déblocage mis en oeuvre dans le cas d'un blocage impliquant plusieurs bus.

La carte maître 84 connectée au bus 81 se trouve à l'origine d'un blocage dans un cycle à destination de la carte esclave 85 connectée au bus 83. Les trois bus 81, 82, 83 sont donc en situation de blocage. Le blocage a par exemple été provoqué par une situation dans laquelle le signal d'existence d'une adresse en cours de cycle ASG/ est forcé à zéro sur le bus 81 ; il se propage sur les bus 82 et 83 dans le sens de propagation 87 du fait que les coupleurs de bus 86₁₂ et 86₂₃ assurent une communication en raison du fait d'une situation de filtrage d'adresse passante.

La carte maître 88, ou la carte système (non représentée) détecte le blocage de la configuration, et va dès lors se donner les moyens d'isoler le bus défaillant en mettant en état d'inhibition les allocateurs des cartes coupleurs de bus 86₃₂, 86₂₃, 86₂₁, et 86₁₂ donnant accès au bus défaillant 81.

Le processus est le suivant :
. la carte 88 émet le signal de décongestion sur le bus 83, ce qui provoque la libération du bus par le coupleur de bus 86₃₂ ;
. la carte 88 fait ensuite émettre le signal de décongestion par le coupleur de bus 86₃₂ à destination du bus 82, par l'intermédiaire du coupleur 86₂₃ ; ceci permet la libération du bus 82 par déblocage du coupleur 86₂₁ ;
. la carte 88 écrit ensuite un bit d'inhibition de l'allocateur du coupleur de bus 86₂₁, pour isoler le bus défaillant 81 ;
. la carte 88 ramène enfin successivement sur le bus 82 et sur le bus 83, le signal de décongestion dans l'état opposé (niveau repos), de façon à relancer les demandes d'accès inhibées.

L'implantation des moyens de décongestion par signal unique s'effectue avantageusement dans des systèmes multibus à coupleurs de bus équipés des moyens de gestion de demandes d'accès réciproques simultanés (gestion de "collision"), comme décrit ci-après. En effet, dans ce cas, il existe une synergie tout à fait favorable entre les gestions de collision et les décongestions, du point de vue de la similarité tant des caractéristiques structurelles que fonctionnelles des systèmes correspondants.

La situation de "collision" peut être présentée en relation avec la figure 4.

Lorsque la carte 84 veut atteindre la carte 91, elle prend et bloque le bus 81. Si à ce moment, la carte 90 veut, pour sa part, atteindre la carte 89, elle prend et bloque le bus 82. Les deux bus 81 et 82 étant bloqués, les coupleurs 86₁₂ et 86₂₁ ne peuvent pas répondre : il y a collision. Si aucun dispositif spécifique de déblocage n'est prévu, le système reste à l'état bloqué jusqu'à l'apparition des "chiens de garde" sur les cartes maîtres 84 et 90 qui partent en traitement d'erreur.

Pour éviter ce problème, on peut équiper les bus d'un signal de collision COLG. Ce signal peut être émis par chaque coupleur de bus 86 lors de la détection d'une collision par le coupleur. D'une façon générale, pour chaque paire de coupleurs, il est défini lors de l'initialisation de la configuration un coupleur prioritaire et un coupleur non prioritaire. En cas de collision, c'est le coupleur non prioritaire qui émet le signal COLG. Ce signal est reçu par toutes les cartes maîtres se trouvant sur le bus correspondant, et provoque deux actions :
. il fait relâcher le bus par la carte qui l'a pris et qui le bloque, en agissant sur les signaux de contrôle de bus. La carte est alors inhibée et attend une autorisation pour pouvoir reprendre le bus et terminer son cycle ;
. il empêche les autres cartes maîtres de prendre le bus, en agissant sur leur système d'allocation.

Seul le coupleur qui émet le signal de collision peut prendre le bus, et établir le chemin jusqu'au destinataire du cycle considéré comme étant prioritaire. Lorsque le chemin est établi, le coupleur arrête l'émission du signal COLG, et les autres cartes peuvent de nouveau participer à une phase d'allocation du bus, puis accéder au bus en fonction des résultats d'arbitrage.

Il existe donc une réelle synergie entre les mécanismes de résolution de collision interbus, et le processus de déblocage du système multibus. Il est donc avantageux d'utiliser le même signal de décongestion pour la mise en oeuvre des deux mécanismes.

La figure 5 schématise les modules fonctionnels à prévoir dans la carte système pour la gestion de l'émission du signal unique de décongestion et de résolution de collision.

Pour mettre en oeuvre cette configuration, il est nécessaire d'ajouter dans la carte système, dans les cartes maîtres UTS des bus et dans les coupleurs de bus, un circuit bistable permettant d'émettre le signal unique de décongestion. Ce bistable est adressable par programme dans la zone privée des cartes système et UTS, et dans la zone de couplage des coupleurs de bus. Ce bistable de décongestion/collision est par exemple mis à 1 par un cycle écriture, puis mis à zéro par un autre cycle écriture.

Le signal de décongestion émis est actif sur toutes les cartes présentes sur le bus, excepté sur la carte émettrice.

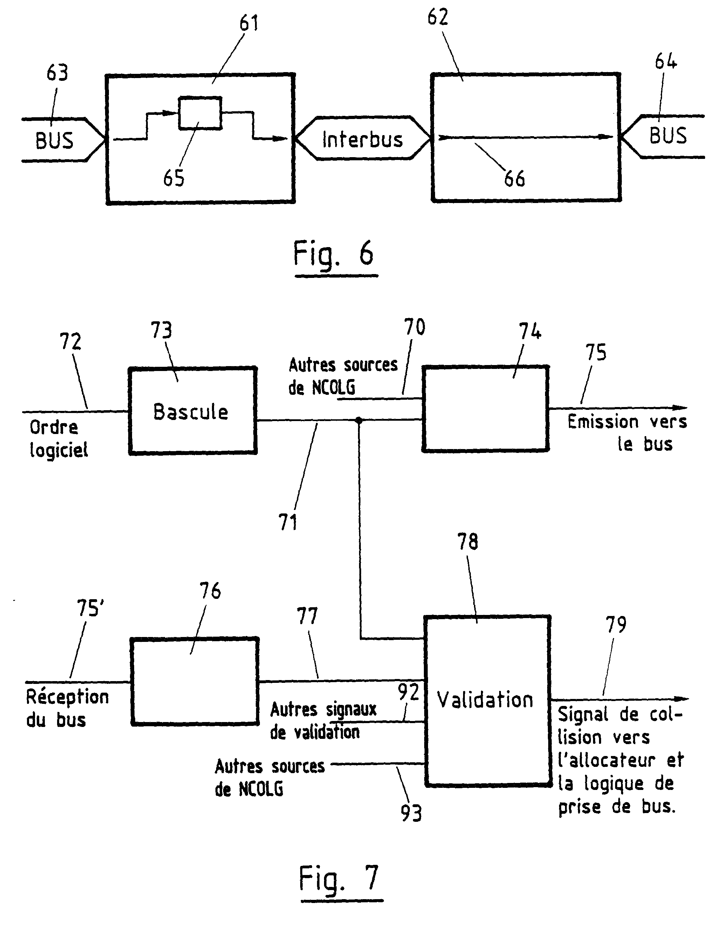

La figure 6 schématise le montage dans le cas d'une paire de coupleurs de bus 61, 62 assurant la communication entre un premier bus 63 et un second bus 64. Le mécanisme est représenté dans un seul sens, mais fonctionne évidemment de façon symétrique dans l'autre sens. Le bistable de collision/décongestion 65 dans le coupleur 61 fait émettre le signal de décongestion/collision 66 par le coupleur de bus 62 associé et donc sur le bus distant 64.

Les figures 5 et 7 schématisent les modules logiques à prévoir dans la carte système d'une part, et dans les coupleurs de bus d'autre part respectivement, pour la gestion du signal unique de collision/décongestion.

Comme représenté en figure 5, pour la carte système, un signal interne 51 de commande de l'émission du signal de congestion/décongestion est apporté par un ordre logiciel 52 à travers une bascule 53. Le signal unique de congestion/décongestion 55 est envoyé sur le bus à travers un circuit tampon 54.

Pour la prise en compte des signaux uniques de collision/décongestion 55′, qui ne sont pas toujours émis par la carte système, un tampon 56 assure leur prise en compte en réception du bus. Le signal interne 51 de commande logicielle d'émission du signal collision/décongestion, et le signal 57 provenant du tampon 56 de réception du bus, alimentent un circuit de validation 58 qui entraîne l'inhibition de l'allocateur et de la logique de prise de bus de la carte lorsque le signal de collision/décongestion ne provient pas de la carte système.

On retrouve une configuration de même type dans le schéma de la figure 7 correspondant à la logique de prise en compte du signal de collision/décongestion dans une carte coupleur de bus.

Le signal interne de collision 71 est généré par un ordre logiciel externe 72 à travers une bascule 73. L'ordre logiciel provient du coupleur de bus distant (bascule 65 du coupleur 61 de la figure 6).

Le signal interne de collision 71 engendre l'émission du signal collision/décongestion 75 sur son bus à travers un tampon 74. Le coupleur de bus émettra également le signal 75 de collision/décongestion sur détection d'une double demande réciproque simultanée 70, lorsque la carte coupleur de bus est non prioritaire. Cette situation correspond à la détection d'une collision proprement dite sur la paire de bus, au cours de laquelle le coupleur de bus non prioritaire inhibe le demandeur sur son bus.

D'autre part, le coupleur de bus prend en compte les signaux de collision/décongestion 75′ reçus du bus, qui ne proviennent pas toujours de lui-même. Le signal de collision/décongestion reçu 75′ traverse le tampon 76 pour fournir un signal interne 77 alimentant l'une des entrées d'un circuit de validation 78. Le circuit 78 fournit en sortie un signal de collision vers l'allocateur et la logique de prise de bus du coupleur. Les paramètres commandant l'émission du signal 79 sont :
. le signal interne de collision 71 ;
. le signal interne 77 de réception d'une collision/décongestion sur le bus ;
. un signal de validation 92 activé soit par le signal de décongestion sur ordre logiciel 72, soit par un signal d'inhibition de prise en compte de la collision lors d'une double demande simultanée réciproque dans la paire de coupleurs ;
. un signal destiné à faire relâcher le fil BBSYG (prochain maître désigné) à la fin des transferts en mode bloc ;
. un signal de prise en compte des collisions sur le bus distant.

Ces deux derniers signaux arrivent par exemple à travers le fil 93.

Le dernier signal 93 (prise en compte de la collision sur le bus distant) est nécessaire pour faire relâcher l'allocateur du coupleur de bus prioritaire qui a été activé par le demandeur du bus non prioritaire (demandeur qui a été inhibé, comme déjà mentionné, par le coupleur de bus non prioritaire).

## Revendications

1. Procédé de déblocage d'un système multiprocesseurs, ce système comportant au moins un module de traitement constitué chacun de processeurs connectés à un bus principal unique, chacun desdits processeurs incluant une cellule de gestion d'accès au bus principal en deux phases comprenant d'une part un système allocateur de bus fournissant au cours d'une première phase un signal de résultat (négatif ou positif), pour le processeur, de l'arbitrage des demandes d'accès exprimées au cours d'un même cycle par les processeurs du module, et d'autre part un circuit de prise de bus assurant, lors d'une seconde phase, l'accès au bus du processeur par émission d'un signal de maîtrise de bus en cas d'un résultat positif du système allocateur lors de la première phase,
le procédé étant caractérisé en ce qu'il consiste à confier à une carte spécifique de déblocage (20,88) une fonction de détection d'un blocage dudit module et une fonction de libération du bus (82) du dit module (82,90,91),
et en ce que ladite fonction de libération du bus consiste à émettre un signal unique de décongestion (45,55,75), provoquant pour tous les processeurs (90,86₂₃,86₂₁) dudit module d'une part un forçage négatif du résultat d'allocation (33), et d'autre part un forçage en annulation du signal (37,38) de maîtrise dudit bus.

2. Procédé selon la revendication 1 caractérisé en ce que le signal résultat (33) d'allocation d'accès provenant du système d'allocation (31) est fourni par une logique d'arbitrage (35) du module, ledit allocateur (35) recevant en entrée un signal de demande d'accès (47) de chacun des processeurs émettant une demande d'accès audit bus (12) au cours d'un même cycle,
et dans lequel ledit signal unique de décongestion (45,55,75) inhibe ladite participation (47) à l'allocation de chacun desdits processeurs du module.

3. Procédé selon l'une quelconque des revendications 1 ou 2, dans le cas d'un système multibus comprenant au moins deux modules de traitement, chaque module de traitement communiquant avec au moins un autre module à travers une paire symétrique de coupleurs (21,22,23,) de bus principaux, chaque coupleur de bus participant aux mécanismes d'allocation et de prise de bus sur le bus destinataire,
caractérisé en ce que ledit signal unique de décongestion (45,55,75) est émis vers l'allocateur et le circuit de prise de bus de chacun desdits coupleurs (21,22,23) connectés audit bus.

4. Procédé selon la revendication 3, dans le cas d'un blocage en cascade de plusieurs bus (81,82,83) interconnectés par coupleurs de bus principaux (21,22,23)
caractérisé en ce que ladite carte de déblocage (20,88) décongestionne itérativement chacun des bus (82,83) en partant du bus (83) le plus proche, par l'alternance d'une opération d'émission du signal de décongestion (45,55,75) sur chaque bus pour le libérer, puis d'une opération d'envoi au coupleur de bus (86₃₂) dudit bus libéré (83) d'un ordre de transmission du signal de décongestion au bus suivant (82), et/ou d'un ordre d'inhibition de l'allocateur dudit coupleur pour isoler ledit bus suivant lorsqu'il est défaillant.

5. Procédé selon l'une quelconque des revendications 3 et 4, pour un système multiprocesseurs tel que prévu par la revendication 1, dans lequel lesdits coupleurs de bus sont munis de moyens de gestion des collisions de demandes réciproques d'accès au cours d'un même cycle entre deux bus adjacents,
caractérisé en ce que ledit signal de décongestion de bus, et le signal de résolution de collision sont constitués par un signal unique.

6. Procédé selon l'une quelconque des revendications 1 et 5 dans lequel ladite carte de décongestion comporte d'une part des moyens d'identification de la carte défaillante et/ou du module de la carte défaillante à l'origine du blocage, et d'autre part des moyens de neutralisation de ladite carte, et/ou d'isolation dudit module.

7. Procédé selon la revendication 6 dans lequel ladite carte de décongestion est la carte système (20) de réinitialisation du dit système multiprocesseurs et/ou une carte de supervision (88) d'un des modules de traitement dudit système multiprocesseurs.

## Patentansprüche

1. Verfahren zur Entblockierung eines Multiprozessorsystems, das mindestens einen Verarbeitungsmodul enthält, der von an einen einzigen Hauptbus angeschlossenen Prozessoren gebildet wird, wobei jeder Prozessor eine Zelle zur Verwaltung des Zugangs zum Hauptbus in zwei Phasen besitzt, die einerseits ein Buszuweisungssystem, das im Verlauf einer ersten Phase ein Signal bezüglich des positiven oder negativen Ergebnisses der Streitschlichtung der während eines bestimmten Zyklus von den Prozessoren des Moduls ausgesprochenen Zugangsanfragen liefert, und die andererseits eine Schaltung zur Übernahme der Busleitung enthält, die in einer zweiten Phase den Zugang zum Bus des Prozessors durch Aussenden eines Signals gewährleistet, das die Übernahme der Busleitung im Fall eines positiven Ergebnisses im Zuweisungssystem während der ersten Phase bedeutet, dadurch gekennzeichnet, daß das Verfahren darin besteht, einer spezifischen Entblockierkarte (20, 88) eine Funktion der Erfassung der Blockierung des Moduls und eine Funktion der Freigabe der Busleitung (82) des Moduls (82, 90, 91) zu übertragen, und daß die Funktion der Freigabe der Busleitung darin besteht, ein einziges Signal (45, 55, 75) zur Entblockierung auszusenden, das für alle Prozessoren (90, 86₂₃, 86₂₁) des Moduls einerseits das Ergebnis der Zuweisung (33) negativ macht und andererseits das Signal (37, 38), mit dem der Bus übernommen wurde, annuliert.

2. Verfahren nach Anspruch 1, dadurch gekennzeichnet, daß das vom Zuweisungssystem (31) kommende Signal (33) mit dem Ergebnis der Zugangszuweisung von einer Streitschlichtungsschaltung (35) des Moduls geliefert wird, wobei die Streitschlichtungsschaltung (35) eingangsseitig ein Zugangsanfragesignal (47) von jedem der Prozessoren empfängt, die eine Zugangsanfrage an den Bus (12) während eines gegebenen Zyklus richten, wobei das einzige Entblockierungssignal (45, 55, 75) die Teilnahme (47) an der Zuweisung jedes der Prozessoren des Moduls sperrt.

3. Verfahren nach einem beliebigen der Ansprüche 1 oder 2 für den Fall eines Mehrfachbussystems mit mindestens zwei Verarbeitungsmoduln, die je mit mindestens einem anderen Modul über ein symmetrisches Paar von Hauptbuskopplern (21, 22, 23) verkehren, wobei jeder Buskoppler an den Zuweisungsund Busübernahmemechanismen zum Zielbus teilhat, dadurch gekennzeichnet, daß das einzige Entblockierungssignal (45, 55, 75) zur Zuweisungsschaltung und zur Busübernahmeschaltung jedes der an den Bus angeschlossenen Koppler (21, 22, 23) gesendet wird.

4. Verfahren nach Anspruch 3 für den Fall einer Blockierung mehrerer miteinander über Hauptbuskoppler (21, 22, 23) verbundener Busleitungen (81, 82, 83) in Kaskade, dadurch gekennzeichnet, daß die Entblockierungskarte (20, 88) jede der Busleitungen (82, 83) ausgehend vom nächstliegenden Bus (83) iterativ entblockiert, indem abwechselnd das Entblokkiersignal (45, 55, 75) auf jeden Bus zu dessen Freigabe gesendet wird und dann ein Befehl zur Übermittlung des Entblockiersignals an den nächstfolgenden Bus (82) dem Buskoppler (86₃₂) der freigegebenen Busleitung (83) und/oder ein Befehl zur Sperrung des Zuweisungssystems des Kopplers zugeleitet wird, um den nächstfolgenden Bus zu isolieren, wenn er gestört ist.

5. Verfahren nach einem beliebigen der Ansprüche 3 und 4 für ein Multiprozessorsystem, wie es im Anspruch 1 vorgesehen ist, wobei die Buskoppler mit Mitteln zur Abwicklung der Kollisionen zwischen reziproken Zugangsanfragen während eines gleichen Zyklus zwischen zwei benachbarten Busleitungen versehen sind, dadurch gekennzeichnet, daß das Busentblockiersignal und das Signal zur Behebung von Kollisionen von einem einzigen Signal gebildet werden.

6. Verfahren nach einem beliebigen der Ansprüche 1 und 5, in dem die Entblockierkarte einerseits Mittel zur Identifizierung der gestörten Karte und/oder des Moduls der gestörten Karte, auf der die Blockierung beruht, und andererseits Mittel zur Neutralisierung der Karte und/oder zur Isolierung des Moduls enthält.

7. Verfahren nach Anspruch 6, in dem die Entblockierkarte die Systemkarte (20) zur Rücksetzung des Multiprozessorsystems und/oder eine Überwachungskarte (88) eines der Verarbeitungsmoduln des Multiprozessorsystems ist.

## Claims

1. Method of unblocking a multiprocessor system comprising at least one processor module comprising processors each connected to a single main bus, each of said processors including a cell for management of access to the main bus in two stages comprising, firstly, a bus allocator system supplying in a first stage a result signal (negative or positive), for the processor, of the arbitration of access requests submitted during the same cycle by the processors of the module, and, secondly, a bus busying circuit procuring, in a second stage, access of the processor to the bus by sending a "bus master" signal in the event of a positive result from the allocator system in the first stage,
the method being characterized in that it consists in entrusting to a dedicated unblocking board (20,88) a function of detecting blocking of said module and a function of releasing the bus (82) of said module (82,90,91),
and in that said bus releasing function consists in sending a single decongestion signal (45,55,75) causing, for all the processors (90, 86₂₃, 86₂₁) of said module, firstly, forcing of a negative allocation result (33), and, secondly, forced cancellation of the control signal (37,38) of said bus.

2. Method according to claim 1 characterized in that the access allocation result signal (33) from the allocation system (31) is supplied by arbitration logic (35) of the module, said allocator (35) receiving at its input an access request signal (47) from each of the processors sending a request to access said bus (12) during the same cycle,
and wherein said single decongestion signal (45,55,75) inhibits said participation (47) in the allocation of each of said processors of the module.

3. Method according to claim 1 or claim 2, in the case of a multibus system comprising at least two processor modules, each processor module communicating with at least one other module via a symmetrical pair of main bus interfaces (21,22,23), each bus interface participating in the bus allocation and bus busying mechanisms on the destination bus,
characterized in that said single decongestion signal (45,55,75) is sent to the allocator and the bus busying circuit of each of said interfaces (21,22,23) connected to said bus.

4. Method according to claim 3, in the case of cascaded blocking of a plurality of buses (81,82,83) interconnected by main bus interfaces (21,22,23),
characterized in that said unblocking board (20,88) decongests each of the buses (82,83) iteratively starting with the nearest bus (83), by alternation of an operation of sending the decongestion signal (45,55,75) to each bus to release it, and then an operation of sending to the bus interface (86₃₂) of said released bus (83) an instruction to transmit the decongestion signal to the next bus (82), and/or an instruction to inhibit the allocator of said interface to isolate said next bus if it is faulty.

5. Method according to claim 3 or claim 4, for a multiprocessor system as claimed in claim 1, wherein said bus interfaces have means for management of reciprocal access request collisions between two adjacent buses during the same cycle,
characterized in that said bus decongestion signal and the collision resolution signal are constituted by a single signal.

6. Method according to any one of claims 1 to 5 wherein said decongestion board includes, firstly, means for identifying the faulty board and/or the module of the faulty board causing the blockage and, secondly, means for neutralizing said board and/or isolating said module.

7. Method according to claim 6 wherein said decongestion board is the system board (20) which resets said multiprocessor system and/or a supervisory board (88) of one of the processor modules of said multiprocessor system.
